# EUROPÄISCHE PATENTANMELDUNG

(11) **EP 1 700 521 A1**
(43) Veröffentlichungstag der Anmeldung: **13.09.2006**
(21) Anmeldenummer: 06001304.2
(22) Anmeldetag: 23.01.2006
(51) Int. Cl.: A01J 25/11, A01J 25/15

(54) **Vorrichtung und Verfahren zur Verarbeitung einer Mischung aus Käsebruch und Molke**

(30) Priorität: 11.03.2005 DE 102005011410
(71) Anmelder: ALPMA Alpenland Maschinenbau GmbH, 83543 Rott am Inn (DE)
(72) Erfinder: Hubatschek, Josef, 83093 Bad Endorf (DE); Weger, Karl, 83543 Rott am Inn (DE); Ostermaier, Norbert, 83527 Haag (DE); Baumgartner, Heinrich, 83135 Schechen (DE); Dürmeier, Siegfried, 84556 Kastl (DE)
(74) Vertreter: Manitz, Finsterwald & Partner GbR

(57) **Zusammenfassung**

Die Erfindung betrifft eine Vorrichtung zur Verarbeitung einer Mischung aus Käsebruch und Molke mit zumindest einer Käseform, welche einen Boden, eine umlaufende Seitenwand und eine deckelseitige Siebplatte aufweist, und mit einer Betätigungseinrichtung zur relativen Bewegung der Siebplatte in Richtung des Bodens der Käseform. Dabei sind gemäß einer ersten Alternative die Öffnungen der Siebplatte schlitzförmig ausgebildet. Gemäß einer zweiten Alternative beanspruchen die Öffnungen der Siebplatte einen Flächenanteil zwischen 7 % und 16 % der Siebplatte. Die Erfindung betrifft ferner ein Verfahren zum Betrieb einer erfindungsgemäßen Vorrichtung.

## Beschreibung

Die Erfindung betrifft eine Vorrichtung zur Verarbeitung einer Mischung aus Käsebruch und Molke mit zumindest einer Käseform, welche einen Boden, eine umlaufende Seitenwand und eine deckelseitige Siebplatte aufweist, und mit einer Betätigungseinrichtung zur relativen Bewegung der Siebplatte in Richtung des Bodens der Käseform sowie ein Verfahren zum Betrieb einer solchen Vorrichtung.

Bei der Käseherstellung wird durch die Verarbeitung von Milch unter teilweiser Gerinnung derselben ein Gemisch auch Käsebruch und Molke hergestellt. Diesem Gemisch wird im Folgenden je nach der Art des herzustellenden Käses die Molke wenigstens teilweise entzogen, um die gewünschte Textur des Käses zu erzielen. Dazu wird in der Regel die Mischung aus Käsebruch und Molke aus einem Vorratsbehälter über eine entsprechende Einfüllleitung in eine Käseform eingefüllt. Der Mischung wird sodann die Molke entzogen, indem Molke aus in den Wandungen der Käseform vorgesehenen Durchbrechungen austreten kann. Dieser Vorgang des Entziehens der Molke kann in vorteilhafter Weise dadurch unterstützt werden, dass mit der eingangs genannten deckelseitigen Siebplatte auf das in der Käseform befindliche Gemisch aus Käsebruch und Molke gedrückt wird. Hierdurch wird erreicht, dass Molke aufgrund des entstehenden Überdrucks noch effizienter und schneller durch die in der Käseform vorhandenen Durchbrechungen sowie durch die deckelseitige Siebplatte gepresst wird.

Nachteilig an den beschriebenen Vorrichtungen ist die Tatsache, dass sich die Siebplatte vergleichsweise schnell mit Käsebruch-Stücken zusetzt, so dass deren Siebfunktion nur noch bereichsweise oder aber überhaupt nicht mehr gegeben ist. In der Folge kann dann durch die Siebplatte keine Molke aus der Käseform austreten, was den gesamten Prozess der Trennung von Molke und Käsebruch auf nachteilige Weise verlangsamt.

Eine Aufgabe der Erfindung besteht darin, eine Vorrichtung der eingangs genannten Art derart weiterzubilden, dass mit möglichst einfachen Mitteln ein schnelles Austreten von Molke aus der Käseform insbesondere über die Siebplatte ermöglicht wird.

Gemäß einer ersten Variante der vorliegenden Erfindung wird diese Auf gabe durch die Merkmale des Anspruchs 1 und insbesondere dadurch gelöst, dass die Öffnungen der Siebplatte schlitzförmig ausgebildet sind, wobei sich zumindest ein Großteil der schlitzförmigen Öffnungen von einem Randbereich der Siebplatte zum gegenüberliegenden Randbereich der Siebplatte erstreckt..

Im Rahmen der Erfindung wurde erkannt, dass man sich die beim Befüllen der Käseform entstehende Strömung, welche in der Regel zumindest bereichsweise an der deckelseitigen Siebplatte entlang verläuft, zunutze machen kann, um die in der Siebplatte vorhandenen Öffnungen zu spülen und dadurch frei zu halten. Eine entsprechende Nutzung der genannten Strömung wird jedoch nur dann in effizienter Weise möglich, wenn die üblicherweise eine kreisrunde oder quadratische Form aufweisenden Öffnungen der Siebplatte erfindungsgemäß nun in Form von vergleichsweise langen Schlitzen ausgebildet werden, da in diesem Fall die in Längsrichtung der Schlitze verlaufende Strömung für den beschriebenen Spüleffekt sorgen und somit sicherstellen kann, dass die schlitzförmigen Öffnungen der Siebplatte sich nicht oder nur noch sehr geringfügig zusetzen. Besonders gut funktioniert das erfindungsgemäße Prinzip, wenn sich insbesondere alle schlitzförmigen Öffnungen der Siebplatte von einem Randbereich derselben zum gegenüberliegenden Randbereich erstrecken.

Da die Strömung von Molke und Käsebruch entlang der dem Innenbereich der Käseform zugewandten Unterseite der Siebplatte in der Regel im Wesentlichen geradlinig verläuft, lässt sich der erfindungsgemäße Effekt besonders gut realisieren, wenn die schlitzförmigen Öffnungen jeweils entlang einer Geraden verlaufen, welche sich bevorzugt in derjenigen Richtung erstreckt, die parallel zu zumindest einer Strömungskomponente des Gemisches aus Käsebruch und Molke verläuft. Alternativ oder zusätzlich können die schlitzförmigen Öffnungen auch parallel zueinander verlaufen.

Weiterhin können die erfindungsgemäßen schlitzförmigen Öffnungen besonders gut frei von Käsebruch gehalten werden, wenn sie eine Breite zwischen 0,1 mm und 0,2 mm insbesondere eine Breite von ungefähr 0,15 mm aufweisen.
Die einander benachbarten schlitzförmigen Öffnungen können einen gegenseitigen Abstand zwischen 0,8 mm und 1,5 mm, insbesondere einen Abstand von ungefähr 1 mm besitzen.
Die genannten Breiten und Abstände der schlitzförmigen Öffnungen stellen neben einem guten Spüleffekt gleichzeitig sicher, dass bei einem Pressen des in der Käseform befindlichen Gemischs aus Käsebruch und Molke durch eine entsprechende Abwärtsbewegung der deckelseitigen Siebplatte ausreichend Molke durch die schlitzförmigen Öffnungen austreten kann.

Konstruktionstechnisch kann die erfindungsgemäße Siebplatte wirtschaftlich aufgebaut werden, wenn sie aus parallel zueinander beabstandeten Stabelementen gebildet ist, welche ihrerseits wiederum über Querstege miteinander verbunden sind. Die Querstege verlaufen dabei bevorzugt senkrecht zu den Stabelementen und können einen zu den Stabelementen identischen Querschnitt besitzen.

Vorteilhafterweise besitzen die Stabelemente einen sich mit zunehmendem Abstand vom Boden der Käseform verjüngenden, insbesondere einen im Wesentlichen dreieckigen Querschnitt. Mit einem solchen Querschnitt wird sichergestellt, dass einem Festsetzen von Käsebruch-Stücken zwischen den Stabelementen wirksam begegnet wird. Es sind jedoch auch beliebige andere alternative Querschnittsformen der Stabelemente möglich, insbesondere können sie beispielsweise eine Linsenform aufweisen, wobei die Längserstreckung des linsenförmigen Querschnitts parallel zur Siebplatte verläuft.

Die die Stabelemente verbindenden Querstege können einen sich mit zunehmendem Abstand vom Boden der Käseform vergrößernden, insbesondere ebenfalls einen im Wesentlichen dreieckigen Querschnitt aufweisen. Wenn sowohl die Stabelemente als auch die Querstege einen im Wesentlichen dreieckigen Querschnitt besitzen, werden sie folglich bevorzugt mit ihren Kantenbereichen und nicht entlang der Seiten der dreieckigen Querschnitte miteinander verbunden.
Eine Verbindung zwischen den Querstegen und den Stabelementen kann dabei mittels eines Schweißvorgangs, insbesondere mittels Punktschweißen, hergestellt werden.

Um eine ausreichende Stabilität der Siebplatte sicherzustellen, ist es bevorzugt, wenn benachbarte Querstege einen gegenseitigen Abstand zwischen 10 mm und 60 mm aufweisen.

Die dem Boden der Käseform zugewandten Seiten der Stabelemente können zumindest im Wesentlichen innerhalb einer gemeinsamen Ebene verlaufen, so dass sie letztlich auch eine ebene Druckfläche bilden, welche dazu geeignet ist, das in der Käseform befindliche Gemisch aus Käsebruch und Molke flächig zu pressen, ohne unerwünschte Abdrücke auf dem Käsebruchkuchen zu hinterlassen. Dementsprechend ist es auch sinnvoll, die die Stabelemente verbindenden Querstege auf derjenigen Seite der Stabelemente vorzusehen, welche dem Innenraum der Käseform abgewandt ist.

Die Siebplatte kann je nach der Form der zu erzeugenden Käsestücke eine rechteckige, quadratische, kreisförmige oder eine beliebige andere Form aufweisen.

Besonders bevorzugt ist es, wenn die Längsrichtung der schlitzförmigen Öffnungen in derjenigen Richtung verläuft, in der die Siebplatte ihre maximale Erstreckung aufweist. Auf diese Weise wird in einem maximal großen Bereich der Siebplatte der erfindungsgemäß vorteilhafte Spüleffekt erzielt.

Ferner ist es sinnvoll, wenn die Siebplatte eine Öffnung für eine Einfüllleitung aufweist, durch die das Gemisch aus Käsebruch und Molke in die Käseform eingeleitet werden kann. Im Bereich dieser Öffnung kann dann eine Verschlussvorrichtung zum wahlweisen Öffnen und Schließen des siebplattenseitigen Endes der Einfüllleitung vorgesehen werden. Diese Verschlussvorrichtung wird bevorzugt mit zumindest einem Leitkörper zur Umlenkung von einströmendem Käsebruch-Molke-Gemisch ausgestattet. Ein solcher Leitkörper kann dann dafür sorgen, dass das Gemisch aus Käsebruch und Molke in möglichst effizienter Weise entlang der schlitzförmigen Öffnungen der Siebplatte strömt. Vorteilhaft ist es dabei, wenn der Leitkörper derart ausgebildet wird, dass zumindest ein Teil des einströmenden Käsebruch-Molke-Gemischs in Längsrichtung der schlitzförmigen Öffnungen entlang der dem Boden der Käseform zugewandten Seite der Siebplatte gelenkt wird. Zu diesem Zweck besitzt der Leitkörper insbesondere im Wesentlichen eine sich parallel zur Siebplatte erstreckende Tellerform. Der Randbereich eines solchen tellerförmigen Leitkörpers kann etwas näher an der Unterseite der Siebplatte angeordnet sein als vom Rand beabstandete Bereiche des Leitkörpers, um so ein gezieltes Anströmen der Unterseite der Siebplatte noch zusätzlich zu verbessern.

Wie bereits erläutert, ist es grundsätzlich vorteilhaft, wenn die Molke möglichst schnell aus der Käseform austreten kann. In diesem Zusammenhang ist es sinnvoll, wenn nicht nur Molke durch die Siebplatte, sondern auch durch die Wandungen der Käseform treten kann. Zu diesem Zweck besitzt die umlaufende Seitenwand und insbesondere auch der Boden der Käseform entsprechende Durchbrechungen.

Gemäß einer zweiten Variante der vorliegenden Erfindung wird die eingangs genannte Aufgabe auch durch die Merkmale des Patentanspruchs 19 und insbesondere dadurch gelöst, dass die Öffnungen der Siebplatte einen Flächenanteil zwischen 7% und 16%, insbesondere ungefähr 12% der Gesamtfläche der Siebplatte beanspruchen.

Auch durch die genannten Öffnungsverhältnisse wird erreicht, dass sich die Siebplatte nicht in nachteiliger Weise mit Käsebruch-Stücken zusetzt, wobei die Öffnungen der Siebplatte eine beliebige Form aufweisen können. Gleichzeitig stellen die genannten Öffnungsverhältnisse sicher, dass die Molke beim Pressen des Gemischs aus Käsebruch und Molke ausreichend schnell durch die Siebplatte strömen kann.

Die beiden erfindungsgemäßen Alternativen lassen sich in beliebiger Weise kombinieren.

Bei einem erfindungsgemäßen Verfahren zum Betrieb einer Vorrichtung gemäß einer oder beider erfindungsgemäßer Alternativen wird die Siebplatte vor dem Befüllen der Käseform nahe dem Boden der Käseform positioniert und während des Befüllens vom Boden weg bewegt. In diesem Fall wird die im Bereich der Siebplatte vorhandene Öffnung der Einfüllleitung zuerst verschlossen, woraufhin die Siebplatte dann nahe dem Boden der Käseform positioniert wird. Anschließend wird das zuvor verschlossene Einfüllende der Einfüllleitung für einen bestimmten Zeitraum geöffnet, so dass ein vorgegebenes Volumen aus Käsebruch und Molke in die Käseform gefüllt werden kann. Während dieses Befüllens wird die Siebplatte gleichzeitig vom Boden der Käseform weg bewegt, oder umgekehrt, so dass beim Befüllen der Käseform die Bildung von Luftblasen und eine die Qualität der Mischung aus Käsebruch und Molke negativ beeinflussende Berührung dieser Mischung mit Luft vermieden werden kann. Dabei muss natürlich die Geschwindigkeit der Relativbewegung der Siebplatte an die Einfüllgeschwindigkeit angepasst sein. Somit ist es bevorzugt, wenn die Geschwindigkeit der Relativbewegung der Siebplatte während des Befüllens derart gewählt wird, dass der Raum zwischen Boden, umlaufenden Seitenwänden und Siebplatte vollständig mit einem Gemisch aus Käsebruch und Molke gefüllt ist. Sinnvollerweise ist die Geschwindigkeit der Relativbewegung zwischen Siebplatte und Käseform so bemessen, dass der Pressdruck in der Käseform zwischen etwa 20 g/ cm² und 300 g/ cm² liegt.

Der Abstand zwischen dem Rand der Siebplatte und den umlaufenden Innenwänden der Käseform ist dabei so gering bemessen, dass allenfalls weit unterdurchschnittlich kleine Teilchen vom Käsebruch durch den engen Spalt zwischen Siebplatte und Wänden der Käseform gelangen können. Der genannte Spalt beträgt bevorzugt maximal 1,4 mm.

Besonders bevorzugt ist es, wenn die Käseform mit Überdruck derart befüllt wird, dass während des Befüllens bereits Molke zumindest durch die Siebplatte, bevorzugt jedoch aber auch durch die Wandungen der Käseform, aus der Käseform austritt. Auf diese Weise kann der Befüllvorgang noch weiter beschleunigt werden.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnungen erläutert; in diesen zeigen:
- Fig. 1: eine schematische Schnittansicht einer Vorrichtung nach einer bevorzugten Ausführungsform der Erfindung zu Beginn des Befüllens,
- Fig. 2: eine schematische Schnittansicht der Vorrichtung gemäß Fig. 2 zu Beginn des Pressens,
- Fig. 3: eine Draufsicht auf eine schematisch dargestellte Siebplatte gemäß der Erfindung,
- Fig. 4: einen vergrößerten Ausschnitt aus der Siebplatte gemäß Fig. 3,
- Fig. 5: einen Abschnitt eines Schnitts durch die Siebplatte gemäß Fig. 3 entlang der Schnittlinie A-A,
- Fig. 6a: die Schnittdarstellung einer an einer Siebplatte gemäß Fig. 3 angebrachten Verschlussvorrichtung in geschlossener Stellung, und
- Fig. 6b: die Schnittdarstellung einer an einer Siebplatte gemäß Fig. 3 angebrachten Verschlussvorrichtung in geöffneter Stellung.

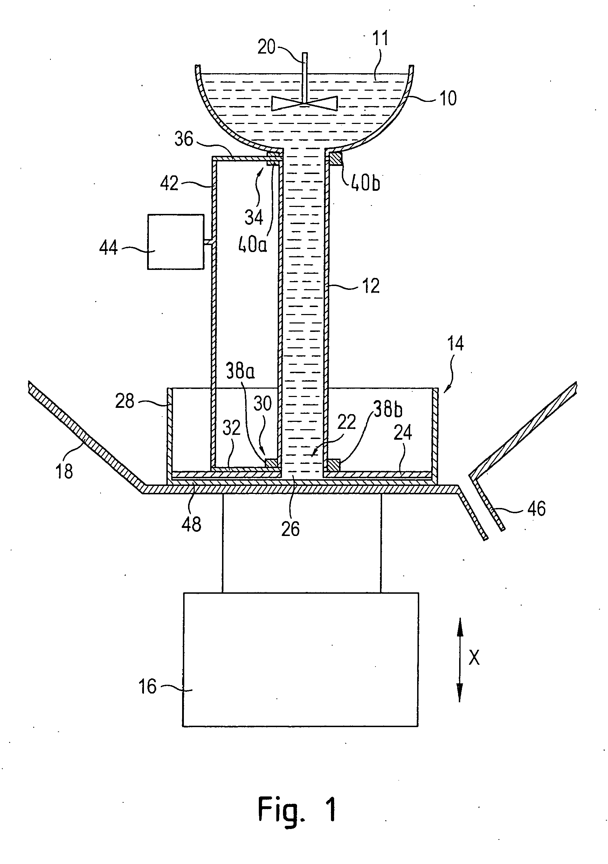

Fig. 1 zeigt eine Vorrichtung zum Abfüllen und zur Weiterverarbeitung einer Mischung 11 aus Käsebruch und Molke mit einem Vorratsbehälter 10, einer damit verbundenen und darunter angeordneten Leitung 12 zum Transport der Mischung 11, einer Käseform 14 und einer Einrichtung 16 zur Relativbewegung mit einem Träger 18 für die Käseform 14.

In dem Vorratsbehälter, der aus Edelstahl gefertigt ist, befindet sich ein Rührer 20, mit dem die Mischung 11 aus Käsebruch und Molke dauernd durchmischt wird, so dass sich kein Käsebruch am Boden des Vorratsbehälters 10 absetzen kann.

Die Leitung 12 ist aus einem Edelstahlrohr gebildet, an das an seinem in die Käseform einführbaren Füllende 22 eine Siebplatte 24 angeflanscht ist. Die Siebplatte 24 weist eine zentrale Öffnung 26 auf, in die das Edelstahlrohr mündet. Die äußere Kontur der Siebplatte 24 ist derart geformt, dass sie wenigstens entlang einer umlaufenden Linie einen mittleren Abstand von ca. 0,5 mm zu der Seitenwand 28 der Käseform 14 hat, wenn die Siebplatte 24 zentriert in die Käseform eingeführt wird. Im Beispiel ist die Käseform 14 zylindrisch ausgebildet, so dass die Siebplatte 24 kreisrund ist.

In der Leitung 12 sind am Füllende 22 eine Absperrvorrichtung 30 mit einem Schieber 32 und an der Verbindung von Leitung 12 und Vorratsbehälter 10 eine weitere Absperrvorrichtung 34 mit einem weiteren Schieber 36 angeordnet. Diese weitere Absperrvorrichtung 34 ist jedoch optional und kann in einer anderen Ausführungsform fehlen. Die Schieber sind in entsprechend dichten Führungen 38a und 38b bzw. 40a und 40b an der Leitung gehalten. Der Schieber 32 ist dabei, in den Figuren nur schematisch gezeigt, auf der Siebplatte 24 geführt, wodurch er große Kräfte aufnehmen kann.

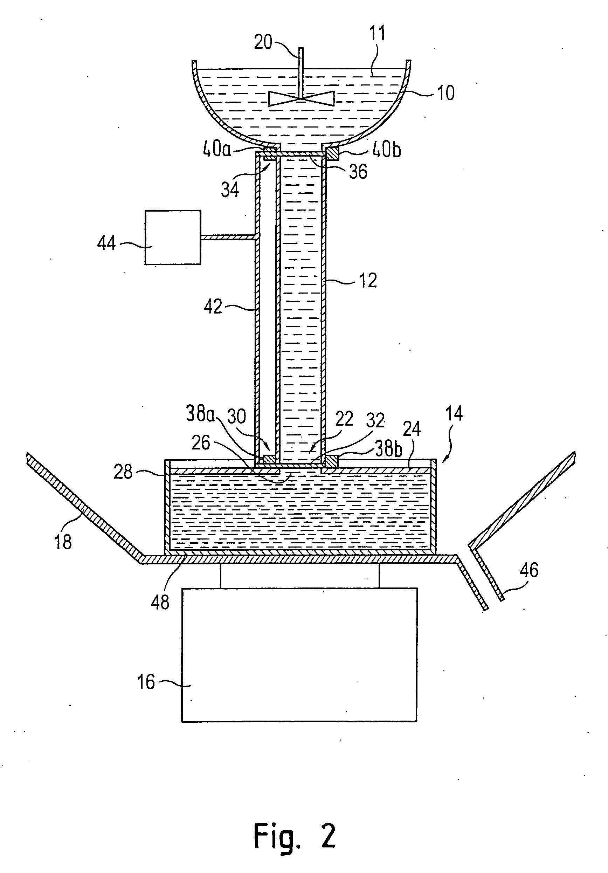

Die Schieber 32 und 36 sind über ein Gestänge 42 mit einer Betätigungsvorrichtung 44 synchron so verschiebbar, dass die Leitung 12, wie in Fig. 1, ganz geöffnet, oder, wie in Fig. 2 gezeigt, ganz geschlossen werden kann.

Die Käseform 14 weist entlang ihrer umlaufenden Seitenwand 28 eine in den Figuren nicht gezeigte übliche Mikroperforation auf, durch die zwar Molke, nicht aber Käsebruch austreten kann.

Während der Vorratsbehälter 10 mit Rührer 20 und die Leitung 12 mit den Absperrvorrichtungen 30 und 34 sowie die Betätigungsvorrichtung 44 mit Gestänge 42 stationär gehalten sind, ist die Käseform 14 auf dem Träger 18 durch die Einrichtung zur Relativbewegung 16 in der mit X bezeichneten Richtung auf und ab bewegbar.

Der Träger 18 ist wannenförmig ausgebildet, so dass in ihm aus der Käseform 14 austretende Molke auffangbar ist, und weist einen in den Figuren nur schematisch gezeigten Abflussstutzen 46 auf, durch den aufgefangene Molke abfließen kann.

Im Folgenden wird ein Verfahren zum Abfüllen und zur Weiterverarbeitung einer Mischung aus Käsebruch und Molke nach einer bevorzugten Ausführungsform der Erfindung beschrieben, bei dem die oben beschriebene Vorrichtung verwendet wird.

Nach Bereitstellen der Käseform 14 auf dem Träger 18 wird dieser mit der Käseform 14 mittels der Einrichtung 16 zur Relativbewegung so weit angehoben, dass die Siebplatte 24 nahe dem Boden 48 der Käseform 14 angeordnet ist (vgl. Fig. 1). Anders als in Fig. 1 gezeigt sind hierbei die Absperrvorrichtungen 30 und 34 geschlossen, das heißt, die Schieber 32 und 36 sind in die Leitung 12 eingefahren und verschließen diese. Dabei ist der Abschnitt der Leitung 12 zwischen den Absperrvorrichtungen 30 und 34 mit der Mischung 11 aus Käsebruch und Molke gefüllt.

Im folgenden Schritt wird, wie in Fig. 1 gezeigt, die Absperrvorrichtungen durch Bewegung der Schieber 32, 36 geöffnet, so dass die Mischung 11 aus Käsebruch und Molke mit Überdruck in die Käseform 14 gepumpt werden kann. Dabei wird der Träger 18 mit der Käseform 14 mittels der Einrichtung 16 zur Relativbewegung mit einer solchen Geschwindigkeit abgesenkt, dass der Raum zwischen Siebplatte 24 und Käseform 14 immer vollständig mit der Mischung 11 aus Käsebruch und Molke gefüllt ist.

Durch den hydrostatischen Druck der Mischung 11 in dem Vorratsbehälter 10 herrscht in der Käseform 14 ein Überdruck, der bereits in diesem Verfahrensstadium Molke aus der mikroperforierten Seitenwand 28 der Käseform 14 presst und dafür sorgt, dass auch Molke durch die Siebplatte 24 nach oben austritt.

Nach Erreichen des vorgegeben Volumens an abzufüllender Mischung werden die Absperrvorrichtungen 30 und 34 durch Bewegung der Schieber 32 bzw. 34 mittels der Betätigungsvorrichtung 44 über das Gestänge 42 synchron geschlossen. Hierdurch wird zum einen das Befüllen der Käseform 14 beendet und zum anderen in dem Abschnitt der Leitung 12 zwischen den Absperrvorrichtungen 30 und 34 die Mischung 11 mit der gleichen Konzentration an Käsebruch wie in dem Vorratsbehälter 10 eingeschlossen, so dass bei dem Öffnen der Absperrvorrichtungen 30 und 34 beim nächsten Verfahrenszyklus zu Anfang sogleich Mischung 11 mit der vorgegebenen Konzentration an Käsebruch und Molke in die Käseform 14 einfüllbar ist.

Aus dieser in Fig.2 gezeigten Position wird nun bei geschlossenen Absperrvorrichtungen 30 und 34 die Käseform 14 durch Anheben des Trägers 18 mit der Einrichtung 16 zur Relativbewegung angehoben, wodurch durch die Käseform 14 ihren Inhalt gegen die Siebplatte 24 und den Schieber 32 als Widerlager presst. Hierdurch wird zum einen durch die Seitenwände der Käseform 14 und auch durch die Siebplatte 24 weitere Molke aus der in der Käseform 14 enthaltenen Mischung gepresst. Zum anderen werden die Käsebruchteilchen zusammengedrückt, so dass sie sich unter Ausbildung eines Käsebruchkuchens gewünschter Textur zusammenlagern. Gleichzeit erhält der Käsebruchkuchen eine im Wesentlichen glatte Oberfläche, insbesondere auch in demjenigen Bereich in dem er an der Siebplatte 24 anliegt.

Bevorzugt kann die Geschwindigkeit der Relativbewegung zwischen Siebplatte 24 und Käseform 14 beim Pressen zwischen etwa 13 mm/s und etwa 25 mm/ s betragen, wodurch eine gleichmäßige, aber schnelle Entfernung der Molke erreicht wird. Der Pressweg kann bevorzugt etwa 10% bis 40% der Füllhöhe der Käseform 14 betragen.

Die Aufwärtsbewegung der Käseform 14 wird beendet, wenn die Käseform 14 den vorgegebenen Pressweg zurückgelegt hat, der im Beispiel etwa 25% der Füllhöhe der Käseform 14 beträgt.

Zur Entnahme des Käsebruchkuchens wird dann die Käseform 14 mittels der Einrichtung 16 zur Relativbewegung von dem Füllende 22 weg nach unten bewegt, so dass der Käsebruchkuchen entnommen werden kann.

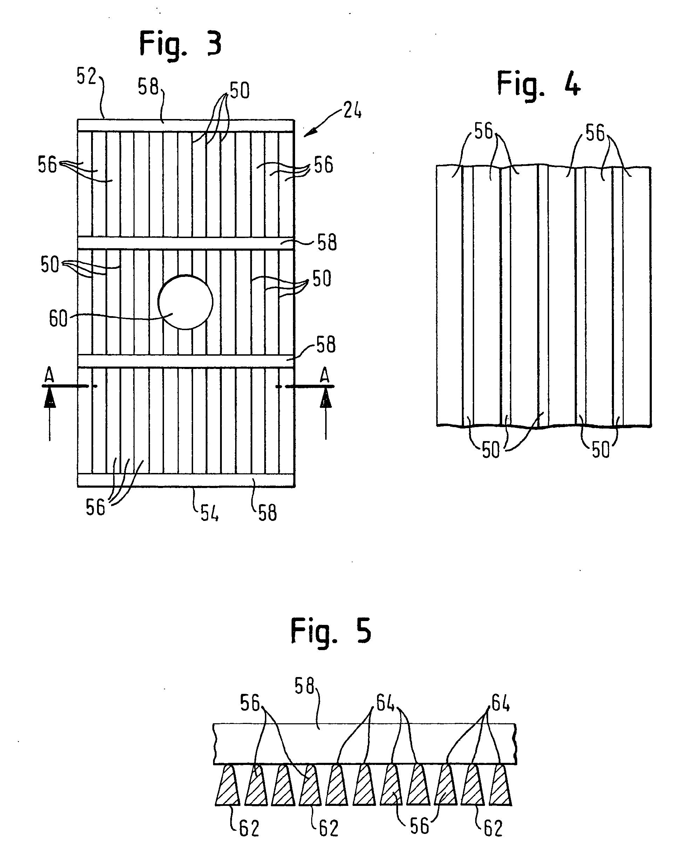

Fig. 3 zeigt eine rechteckige Siebplatte 24, welche eine Vielzahl von schlitzförmigen Öffnungen 50 aufweist, die sich von der einen kürzeren Seite 52 der Siebplatte 24 bis zur gegenüberliegenden kürzeren Seite 54 der Siebplatte 24 erstrecken. Bei Verwendung dieser Siebplatte 24 müsste die Käseform 14 gemäß den Figuren 1 und 2 entsprechend rechteckig ausgebildet und somit an die Form der Siebplatte 24 angepasst werden. In Fig. 3 sind von den genannten schlitzförmigen Öffnungen 50 lediglich exemplarisch einige wenige dargestellt. Bei einer praktischen Ausführungsform der Siebplatte ist die Anzahl der schlitzförmigen Öffnungen 50 in der Regel deutlich größer als in Fig. 3 dargestellt.

Die schlitzförmigen Öffnungen 50 sind zwischen Stabelementen 56 ausgebildet, die sich parallel zueinander erstrecken. Diese Anordnung von Stabelementen 56 und schlitzförmigen Öffnungen 50 ist insbesondere aus Fig. 4 ersichtlich, welche zeigt, dass die Breite der Stabelemente 56 deutlich größer bemessen ist als die Breite der schlitzförmigen Öffnungen 50.

Die Stabelemente 56 sind über sich senkrecht zu ihnen erstreckende Querstege 58 miteinander verbunden, wobei die Anzahl der Querstege 58 ganz deutlich unter der Anzahl der Stabelemente 56 liegt. Die Querstege 58 sind jedoch ebenso wie die Stabelemente 56 äquidistant voneinander beabstandet.

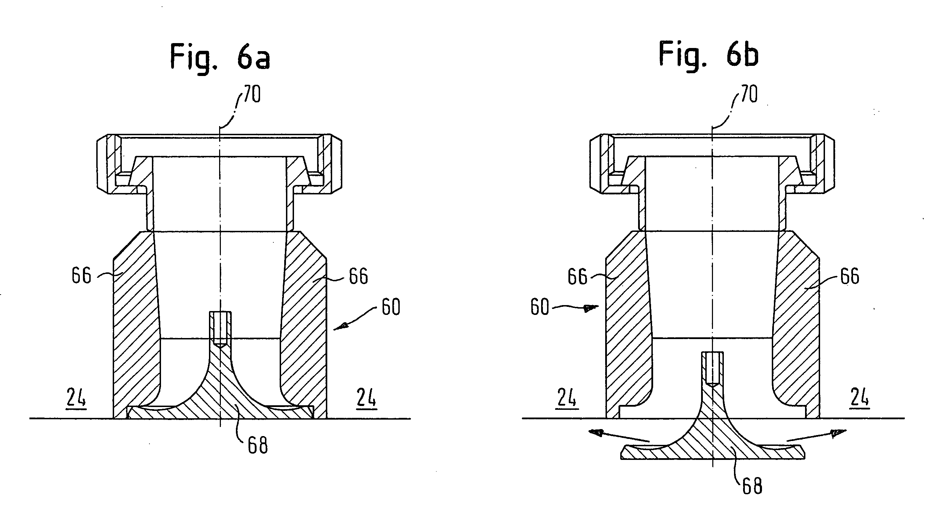

Im zentralen Bereich der Siebplatte 24 gemäß Fig. 3 befindet sich eine Verschlussvorrichtung 60 zum wahlweisen Öffnen und Schließen eines siebplattenseitigen Endes einer in Fig. 3 nicht dargestellten Einfüllleitung. Diese Verschlussvorrichtung 60 wird in Verbindung mit den Fig. 6 a, b noch näher erläutert.

Die in Fig. 5 gezeigte Schnittdarstellung veranschaulicht, dass der Querschnitt der Stabelemente 56 im Wesentlichen dreieckig ist, wobei die Schenkellänge der in Fig. 5 dargestellten Dreiecke ungefähr doppelt so groß ist wie die Länge deren Basis. Diejenige Ecke, an denen die Schenkel des Dreiecks aneinander angrenzen, ist abgerundet ausgeführt. Die anderen beiden Ecken des Dreiecks sind im Wesentlichen scharfkantig.

Die Stabelemente 56 sind so angeordnet, dass sich die Basis ihrer dreieckigen Querschnitte jeweils innerhalb einer Ebene 62 befindet, welche letztlich die Unterseite der Siebplatte 24 bildet.

Wie bereits erläutert, kann der wechselseitige Abstand benachbarter Stabelemente 56 im Bereich der Ebene 62 zwischen 0,1 mm und 0,2 mm liegen und bevorzugt 0,15 mm betragen.

An die Oberseite der Stabelemente 56 grenzt ein Quersteg 58 an, dessen - aus Fig. 5 nicht ersichtlicher - Querschnitt identisch zu dem Querschnitt der Stabelemente 56 sein kann. Der Quersteg 58 und die Stabelemente 56 sind über Schweißstellen 64 miteinander verbunden.

Die Fig. 6a und 6b zeigen eine Verschlussvorrichtung 60, wie sie bei einer Siebplatte 24 gemäß Fig. 3 zum Einsatz gelangen kann.

Die Verschlussvorrichtung 60 besteht im Wesentlichen aus einem rohrförmigen Element 66, welches mit seinem oberen Ende an das siebplattenseitige Ende einer Einfüllleitung angeflanscht werden kann.

Das untere, dem Inneren der Käseform zugewandte Ende des rohrförmigen Elements 66 ist mittels eines Leitkörpers 68 wahlweise verschließbar. Fig. 6a zeigt die geschlossene Stellung, Fig. 6b die geöffnete Stellung.

Der Leitkörper 68 besitzt im Wesentlichen eine Tellerform und ist rotationssymmetrisch zur Achse 70 ausgebildet.

Die Unterseite des Leitkörpers 68 ist eben ausgebildet, so dass sich diese Unterseite in der in Fig. 6a dargestellten geschlossenen Stellung in der gleichen Ebene befindet, wie die Unterseite der Siebplatte 24.

In der geöffneten Stellung gemäß Fig. 6b kann dann Gemisch aus Käsebruch und Molke durch das rohrförmige Element 66 über eine durch den Leitkörper 68 verursachte Umlenkung in den Innenbereich einer Käseform gelangen. Dabei kommt zum Tragen, dass der Leitkörper 68 in seinem Randbereich etwas überhöht ausgebildet ist, so dass das eingefüllte Gemisch in Pfeilrichtung etwas schräg nach oben gegen die Unterseite der Siebplatte 24 gelenkt wird. Durch diese gezielte Anströmung der Unterseite der Siebplatte 24 wird erreicht, dass die erfindungsgemäß vorgesehenen schlitzförmigen Öffnungen ständig gespült und frei von Käsebruchstücken gehalten werden.

### Bezugszeichenliste

- 10: Vorratsbehälter
- 11: Mischung aus Käsebruch und Molke
- 12: Leitung
- 14: Käseform
- 16: Einrichtung zur Relativbewegung
- 18: Träger
- 20: Rührer
- 22: Füllende
- 24: Siebplatte
- 26: Zentrale Öffnung
- 28: Seitenwand
- 30: Absperrvorrichtung
- 32: Schieber
- 34: weitere Absperrvorrichtung
- 36: weiterer Schieber
- 38a, 38b: Führungen
- 40a, 40b: Führungen
- 42: Gestänge
- 44: Betätigungsvorrichtung
- 46: Abflussstutzen
- 48: Boden
- 50: schlitzförmige Öffnungen
- 52: kürzere Seite
- 54: kürzere Seite
- 56: Stabelemente
- 58: Querstege
- 60: Verschlussvorrichtung
- 62: Ebene
- 64: Schweißstellen
- 66: rohrförmiges Element
- 68: Leitkörper
- 70: Achse

- X: Bewegungsrichtungen des Trägers

## Patentansprüche

1. Vorrichtung zur Verarbeitung einer Mischung aus Käsebruch und Molke mit zumindest einer Käseform (14), welche einen Boden (48), eine umlaufende Seitenwand (28) und eine deckelseitige Siebplatte (24) aufweist, und mit einer Betätigungseinrichtung (16) zur relativen Bewegung der Siebplatte (24) in Richtung des Bodens (48) der Käseform (14),
**dadurch gekennzeichnet,**
**dass** die Öffnungen (50) der Siebplatte (24) schlitzförmig ausgebildet sind, wobei sich zumindest ein Großteil der schlitzförmigen Öffnungen (50) von einem Randbereich (52) der Siebplatte (24) zum gegenüberliegenden Randbereich (54) der Siebplatte erstreckt.

2. Vorrichtung nach Anspruch 1,
**dadurch gekennzeichnet,**
**dass** die schlitzförmigen Öffnungen (50) jeweils entlang einer Geraden und/oder parallel zueinander verlaufen.

3. Vorrichtung nach einem der vorhergehenden Ansprüche,
**dadurch gekennzeichnet,**
**dass** die schlitzförmigen Öffnungen (50) eine Breite zwischen 0,1 mm und 0,2 mm, insbesondere eine Breite von 0,15 mm aufweisen und/oder
**dass** benachbarte schlitzförmige Öffnungen (50) einen gegenseitigen Abstand zwischen 0,8 mm und 1,5 mm, insbesondere einen Abstand von 1 mm aufweisen.

4. Vorrichtung nach einem der vorhergehenden Ansprüche,
**dadurch gekennzeichnet,**
**dass** die Siebplatte (24) durch parallel zueinander beabstandete Stabelemente (56) gebildet ist, welche über Querstege (58) miteinander verbunden sind, wobei insbesondere die Stabelemente (56) einen sich mit zunehmendem Abstand vom Boden (48) der Käseform (14) verjüngenden, insbesondere einen im Wesentlichen dreieckigen Querschnitt aufweisen.

5. Vorrichtung nach Anspruch 4,
**dadurch gekennzeichnet,**
**dass** die Querstege (58) einen sich mit zunehmendem Abstand vom Boden (48) der Käseform (14) vergrößernden, insbesondere einen im Wesentlichen dreieckigen Querschnitt aufweisen, und/oder
**dass** die Querstege (58) im Wesentlichen senkrecht zu den Stabelementen (56) verlaufen und/oder dass die Querstege (58) mit den Stabelementen (56), insbesondere punktuell, verschweißt sind,
und/oder
**dass** benachbarte Querstege (58) einen gegenseitigen Abstand zwischen 10 mm und 60 mm aufweisen.

6. Vorrichtung nach einem der Ansprüche 4 oder 5,
**dadurch gekennzeichnet,**
**dass** die dem Boden (48) der Käseform (14) zugewandten Seiten der Stabelemente (56) zumindest im Wesentlichen innerhalb einer gemeinsamen Ebene (62) verlaufen.

7. Vorrichtung nach einem der vorhergehenden Ansprüche,
**dadurch gekennzeichnet,**
**dass** die Siebplatte (24) eine rechteckige, quadratische, kreisförmige oder eine beliebige andere Form aufweist.

8. Vorrichtung nach einem der vorhergehenden Ansprüche,
**dadurch gekennzeichnet,**
**dass** die Längsrichtung der schlitzförmigen Öffnungen (50) in derjenigen Richtung verläuft, in der die Siebplatte (24) ihre maximale Erstreckung aufweist.

9. Vorrichtung nach einem der vorhergehenden Ansprüche,
**dadurch gekennzeichnet,**
**dass** die Siebplatte (24) eine Öffnung für eine Einfüllleitung aufweist, wobei insbesondere im Bereich der Öffnung eine Verschlussvorrichtung (60) zum wahlweisen Öffnen und Schließen des siebplattenseitigen Endes der Einfüllleitung (12) vorgesehen ist, welche mit einem Leitkörper (68) zur Umlenkung von einströmendem Käsebruch-Molke-Gemisch gekoppelt ist, wobei bevorzugt der Leitkörper (68) derart ausgebildet ist, dass zumindest ein Teil des einströmenden Käsebruch-Molke-Gemischs in Längsrichtung der schlitzförmigen Öffnungen (50) entlang der dem Boden (48) der Käseform (14) zugewandte Seite der Siebplatte (24) gelenkt wird.

10. Vorrichtung nach Anspruch 9,
**dadurch gekennzeichnet,**
**dass** der Leitkörper (68) im Wesentlichen eine sich parallel zur Siebplatte (24) erstreckende Tellerform aufweist.

11. Vorrichtung nach einem der vorhergehenden Ansprüche,
**dadurch gekennzeichnet,**
**dass** die Betätigungseinrichtung (16) zur relativen Bewegung der Siebplatte (24) in Richtung des Bodens (48) der Käseform (14) auch zur relativen Bewegung der Siebplatte (24) in eine entgegensetzte Richtung ausgelegt ist.

12. Vorrichtung nach einem der vorhergehenden Ansprüche,
**dadurch gekennzeichnet,**
**dass** der Boden (48) und die umlaufende Seitenwand (28) der Käseform (14) Durchbrechungen aufweisen.

13. Vorrichtung zur Verarbeitung einer Mischung aus Käsebruch und Molke mit zumindest einer Käseform (14), welche einen Boden (48), eine umlaufende Seitenwand (28) und eine deckelseitige Siebplatte (24) aufweist, und mit einer Betätigungseinrichtung (16) zur relativen Bewegung der Siebplatte (24) in Richtung des Bodens (48) der Käseform (14), insbesondere nach einem der vorhergehenden Ansprüche,
**dadurch gekennzeichnet,**
**dass** die Öffnungen (50) der Siebplatte (24) einen Flächenanteil zwischen 7% und 16%, insbesondere ungefähr 12% der Gesamtfläche der Siebplatte (24) beanspruchen.

14. Verfahren zum Betrieb einer Vorrichtung gemäß einem der Ansprüche 1 bis 13,
**dadurch gekennzeichnet,**
**dass** die Siebplatte (24) vor dem Befüllen der Käseform (14) nahe dem Boden (48) der Käseform (14) positioniert und während des Befüllens vom Boden (48) wegbewegt wird.

15. Verfahren nach Anspruch 14,
**dadurch gekennzeichnet,**
**dass** die Käseform (14) mit Überdruck derart befüllt wird, dass während der Befüllens Molke zumindest durch die Siebplatte (24) aus der Käseform (14) austritt, und/oder
**dass** die Geschwindigkeit der Bewegung der Siebplatte (24) während des Befüllens derart gewählt wird, dass der Raum zwischen Boden (48), umlaufenden Seitenwänden (28) und Siebplatte (24) vollständig mit einem Gemisch aus Käsebruch und Molke gefüllt ist.

## Geänderte Patentansprüche

### Geänderte Patentansprüche gemäss Regel 86(2) EPÜ.

**1.** Vorrichtung zur Verarbeitung einer Mischung aus Käsebruch und Molke mit zumindest einer Käseform (14), welche einen Boden (48), eine umlaufende Seitenwand (28) und eine deckelseitige Siebplatte (24) mit schlitzförmigen Öffnungen (50) aufweist, und mit einer Betätigungseinrichtung (16) zur relativen Bewegung der Siebplatte (24) in Richtung des Bodens (48) der Käseform (14),
**dadurch gekennzeichnet,**
**dass** sich zumindest ein Großteil der schlitzförmigen Öffnungen (50) von einem Randbereich (52) der Siebplatte (24) zum gegenüberliegenden Randbereich (54) der Siebplatte erstreckt.

**2.** Vorrichtung nach Anspruch 1,
**dadurch gekennzeichnet,**
**dass** die schlitzförmigen Öffnungen (50) jeweils entlang einer Geraden und/oder parallel zueinander verlaufen.

**3.** Vorrichtung nach einem der vorhergehenden Ansprüche,
**dadurch gekennzeichnet,**
**dass** die schlitzförmigen Öffnungen (50) eine Breite zwischen 0,1 mm und 0,2 mm, insbesondere eine Breite von 0,15 mm aufweisen und/oder
**dass** benachbarte schlitzförmige Öffnungen (50) einen gegenseitigen Abstand zwischen 0,8 mm und 1,5 mm, insbesondere einen Abstand von 1 mm aufweisen.

**4.** Vorrichtung nach einem der vorhergehenden Ansprüche,
**dadurch gekennzeichnet,**
**dass** die Siebplatte (24) durch parallel zueinander beabstandete Stabelemente (56) gebildet ist, welche über Querstege (58) miteinander verbunden sind, wobei insbesondere die Stabelemente (56) einen sich mit zunehmendem Abstand vom Boden (48) der Käseform (14) verjüngenden, insbesondere einen im Wesentlichen dreieckigen Querschnitt aufweisen.

**5.** Vorrichtung nach Anspruch 4,
**dadurch gekennzeichnet,**
**dass** die Querstege (58) einen sich mit zunehmendem Abstand vom Boden (48) der Käseform (14) vergrößernden, insbesondere einen im Wesentlichen dreieckigen Querschnitt aufweisen, und/oder
**dass** die Querstege (58) im Wesentlichen senkrecht zu den Stabelementen (56) verlaufen und/oder dass die Querstege (58) mit den Stabelementen (56), insbesondere punktuell, verschweißt sind, und/oder
**dass** benachbarte Querstege (58) einen gegenseitigen Abstand zwischen 10 mm und 60 mm aufweisen.

**6.** Vorrichtung nach einem der Ansprüche 4 oder 5,
**dadurch gekennzeichnet,**
**dass** die dem Boden (48) der Käseform (14) zugewandten Seiten der Stabelemente (56) zumindest im Wesentlichen innerhalb einer gemeinsamen Ebene (62) verlaufen.

**7.** Vorrichtung nach einem der vorhergehenden Ansprüche,
**dadurch gekennzeichnet,**
**dass** die Siebplatte (24) eine rechteckige, quadratische, kreisförmige oder eine beliebige andere Form aufweist.

**8.** Vorrichtung nach einem der vorhergehenden Ansprüche,
**dadurch gekennzeichnet,**
**dass** die Längsrichtung der schlitzförmigen Öffnungen (50) in derjenigen Richtung verläuft, in der die Siebplatte (24) ihre maximale Erstreckung aufweist.

**9.** Vorrichtung nach einem der vorhergehenden Ansprüche,
**dadurch gekennzeichnet,**
**dass** die Siebplatte (24) eine Öffnung für eine Einfüllleitung aufweist, wobei insbesondere im Bereich der Öffnung eine Verschlussvorrichtung (60) zum wahlweisen Öffnen und Schließen des siebplattenseitigen Endes der Einfüllleitung (12) vorgesehen ist, welche mit einem Leitkörper (68) zur Umlenkung von einströmendem Käsebruch-Molke-Gemisch gekoppelt ist, wobei bevorzugt der Leitkörper (68) derart ausgebildet ist, dass zumindest ein Teil des einströmenden Käsebruch-Molke-Gemischs in Längsrichtung der schlitzförmigen Öffnungen (50) entlang der dem Boden (48) der Käseform (14) zugewandte Seite der Siebplatte (24) gelenkt wird.

**10.** Vorrichtung nach Anspruch 9,
**dadurch gekennzeichnet,**
**dass** der Leitkörper (68) im Wesentlichen eine sich parallel zur Siebplatte (24) erstreckende Tellerform aufweist.

**11.** Vorrichtung nach einem der vorhergehenden Ansprüche,
**dadurch gekennzeichnet,**
**dass** die Betätigungseinrichtung (16) zur relativen Bewegung der Siebplatte (24) in Richtung des Bodens (48) der Käseform (14) auch zur relativen Bewegung der Siebplatte (24) in eine entgegensetzte Richtung ausgelegt ist.

**12.** Vorrichtung nach einem der vorhergehenden Ansprüche,
**dadurch gekennzeichnet,**
**dass** der Boden (48) und die umlaufende Seitenwand (28) der Käseform (14) Durchbrechungen aufweisen.

**13.** Vorrichtung nach einem der vorhergehenden Ansprüche,
**dadurch gekennzeichnet,**
**dass** die Öffnungen (50) der Siebplatte (24) einen Flächenanteil zwischen 7% und 16%, insbesondere ungefähr 12% der Gesamtfläche der Siebplatte (24) beanspruchen.

**14.** Verfahren zum Betrieb einer Vorrichtung gemäß einem der Ansprüche 1 bis 13,
**dadurch gekennzeichnet,**
**dass** die Siebplatte (24) vor dem Befüllen der Käseform (14) nahe dem Boden (48) der Käseform (14) positioniert und während des Befüllens vom Boden (48) wegbewegt wird.

**15.** Verfahren nach Anspruch 14,
**dadurch gekennzeichnet,**
**dass** die Käseform (14) mit Überdruck derart befüllt wird, dass während der Befüllens Molke zumindest durch die Siebplatte (24) aus der Käseform (14) austritt, und/oder
**dass** die Geschwindigkeit der Bewegung der Siebplatte (24) während des Befüllens derart gewählt wird, dass der Raum zwischen Boden (48), umlaufenden Seitenwänden (28) und Siebplatte (24) vollständig mit einem Gemisch aus Käsebruch und Molke gefüllt ist.
